# EUROPÄISCHE PATENTANMELDUNG

(11) **EP 3 042 992 A1**
(43) Veröffentlichungstag der Anmeldung: **13.07.2016**
(21) Anmeldenummer: 15003475.9
(22) Anmeldetag: 07.12.2015
(51) Int. Cl.: D06F 37/20, D06F 37/22, D06F 37/06

(54) **WASCHMASCHINE MIT UNWUCHTKOMPENSATION**

(30) Priorität: 06.01.2015 CH 10152015
(71) Anmelder: V-Zug AG, 6301 Zug (CH)
(72) Erfinder: Schellenberg, Guido, 5702 Niederlenz (CH); Pfenniger, Peter, 6003 Luzern (CH)
(74) Vertreter: Sutter, Kurt

(57) **Zusammenfassung**

Um eine Unwucht in der Beladung einer Waschmaschine auszugleichen, sind an der Trommel (2) der Waschmaschine mindestens sechs Wassertanks (10) auf unterschiedlichen axialen Positionen vorgesehen. Die Wassertanks (10) sind zueinander versetzt und es sind Verbindungsrohre (17) vorgesehen, welche durch die Rippen (16) der Trommel (2) führen. Diese Ausgestaltung erlaubt es, die Unwucht der Trommel (2) mit einfachen Mitteln gut zu kompensieren.

## Beschreibung

### Gebiet der Erfindung

Die Erfindung betrifft eine Waschmaschine mit einer um eine Drehachse drehbaren Trommel und an der Trommel angeordneten Wassertanks zum Ausgleichen einer Unwucht der Trommel gemäss Oberbegriff von Anspruch 1.

### Hintergrund

EP 1736589 beschreibt eine Waschmaschine dieser Art. Sie besitzt eine um eine Drehachse drehbare Trommel. An der Trommel sind drei Wassertanks angeordnet, um eine Unwucht der Trommel, wie sie von einer ungleichmässigen Beladung derselben erzeugt werden kann, auszugleichen. Durch geeignete Beschickung der Tanks mit Wasser können Vibrationen, wie sie beim Zentrifugieren der Wäsche auftreten, reduziert werden.

### Darstellung der Erfindung

Es ist Aufgabe der vorliegenden Erfindung, Vibrationen in einer solchen Waschmaschine weiter zu reduzieren.

Diese Aufgabe wird von der Waschmaschine gemäss Anspruch 1 gelöst.

Demgemäss besitzt die Waschmaschine eine um eine Drehachse drehbare Trommel, welche sich entlang der Drehachse zwischen einem ersten und einem zweiten (Trommel-)Ende erstreckt. An der Trommel sind Wassertanks zum Ausgleichen der Unwucht der Trommel angebracht. Jeder dieser Wassertanks definiert in gefülltem Zustand einen Schwerpunkt.

Insgesamt besitzt die Waschmaschine mindestens sechs solcher Wassertanks. Diese sind in mindestens eine erste und eine zweite Gruppe unterteilt. Dabei befinden sich die Schwerpunkte der Wassertanks der ersten Gruppe näher am ersten Ende der Trommel als am Zweiten, während die Schwerpunkte der Wassertanks der zweiten Gruppe näher am zweiten Ende der Trommel angeordnet sind als am Ersten.

Durch eine derartige Verteilung der Wassertanks in Axialrichtung der Trommel kann die Kompensation der Unwucht verbessert werden, da zusätzlich auch eine ungleichmässige Verteilung der Wäsche entlang der Drehachse kompensiert werden kann. Insbesondere kann dank der anspruchsgemässen Anordnung auch ein Taumeln der Trommel kompensiert werden.

Um den Wassertanks individuell Wasser zuzuführen, kann zumindest am zweiten Ende der Trommel eine Einfüllvorrichtung angeordnet sein.

In diesem Falle kann sich von jedem Wassertank der ersten Gruppe mindestens ein Verbindungsrohr zum zweiten Ende der Trommel erstrecken. Unter einem "Rohr" ist dabei ein starres Rohr, aber auch ein flexibles Rohr im Sinne eines Schlauchs zu verstehen. Insbesondere kann jeder Wassertank der ersten Gruppe über ein solches Verbindungsrohr mit der Einfüllvorrichtung verbunden sein, so dass er vom zweiten Ende der Trommel her befüllt werden kann. Vorteilhaft erstreckt sich das Verbindungsrohr dabei parallel zur Drehachse der Trommel.

Werden Verbindungsrohre dieser Art verwendet, sollte ihr Volumen vorteilhaft kleiner sein als jenes des mit ihnen verbundenen Wassertanks, so dass ein grosser Teil des Gewichts des Wassers im Wassertank ruht und nicht im Verbindungsrohr.

Wenn sich von jedem Wassertank der ersten Gruppe ein Verbindungsrohr zum zweiten Ende der Trommel erstreckt, sollte sich vorteilhaft auch von jedem Wassertank der zweiten Gruppe ein Verbindungsrohr zum ersten Ende der Trommel erstrecken. Dadurch wird die Symmetrie der Anordnung und somit die Auswuchtung der Trommel verbessert, und zudem können für die ersten und zweiten Wassertanks mit den zugehörigen Verbindungsrohren jeweils identische Bauteile eingesetzt werden. Vorteilhaft sind dabei die Verbindungsrohre der ersten und der zweiten Gruppe von Wassertanks baugleich. Verbindungsrohre, die nicht benutzt werden, können endseitig verschlossen sein.

Um die Befüllung und Entleerung der Wassertanks zu verbessern, kann jeder Wassertank mindestens eine Einfüllöffnung und mindestens eine Entlüftungsöffnung aufweisen. Insbesondere können in diesem Falle die Entlüftungsöffnungen der Wassertanks der ersten Gruppe am ersten Ende der Trommel und die Entlüftungsöffnungen der Wassertanks der zweiten Gruppe am zweiten Ende der Trommel angeordnet sein. Damit wird sichergestellt, dass Wasser, das am Ende des Zentrifugierens aus den Entlüftungsöffnungen läuft, über die Enden der Trommel abfliesst und die Wäsche nicht benetzt.

Wird diese Ausführung kombiniert mit den erwähnten Verbindungsrohren, so sind vorteilhaft an jedem Wassertank nebst einer Öffnung zum Verbindungsrohr hin mindestens zwei weitere Öffnungen vorgesehen. Für die Wassertanks der ersten Gruppe bildet die Öffnung zum Verbindungsrohr hin die erwähnte Einfüllöffnung und mindestens eine der zwei weiteren Öffnungen die erwähnte Entlüftungsöffnung, während für die Wassertanks der zweiten Gruppe mindestens die zwei weiteren Öffnungen die Einfüll- und die Entlüftungsöffnungen bilden. Dies erlaubt es wiederum, die gleichen Bauteile für die beiden Gruppen von Wassertanks zu verwenden.

Vorteilhaft sind die Wassertanks äquidistant über den Umfang der Trommel verteilt, d.h. der Winkelabstand jedes Tanks vom jeweils nächsten Wassertank beträgt 360°/N, wobei N die Zahl der Wassertanks ist. Dadurch ergibt sich ein einfacher Aufbau hoher Symmetrie.

Die Wassertanks der ersten und der zweiten Gruppe können über dem Umfang der Trommel abwechslungsweise angeordnet sein. Auch durch diese Massnahme wird die Symmetrie der Anordnung erhöht.

Weiter können an der Mantelfläche der Trommel in an sich bekannter Weise nach innen ragende Rippen als Mitnehmer für die Wäsche angeordnet sein.

Zumindest in einem Teil dieser Rippen, vorzugsweise in allen Rippen, kann je ein Wassertank angeordnet werden, insbesondere jeweils genau ein Wassertank pro Rippe. Dadurch wird in einem einfachen Aufbau der für die Wäsche zur Verfügung stehende Platz optimiert.

Weiter können sich die Rippen insbesondere zwischen dem ersten und dem zweiten Ende der Trommel erstrecken, d.h. sie erstrecken sich über die ganze Länge der Mantelfläche der Trommel. Um den Nutzraum möglichst gross zu halten, verjüngen sich die Rippen, welche einen Wassertank der ersten Gruppe aufnehmen, zum zweiten Ende der Trommel hin, d.h. ihr Querschnitt senkrecht zur Drehachse nimmt zum zweiten Ende hin ab. Umgekehrt verjüngen sich die Rippen, welche einen Wassertank der zweiten Gruppe aufnehmen, zum ersten Ende der Trommel hin.

Werden, wie oben erwähnt, Verbindungsrohre zu den Wassertanks verwendet, so kann mindestens ein Teil der Rippen jeweils mindestens eines dieser Verbindungsrohre aufnehmen. Unter "aufnehmen" ist dabei einerseits zu verstehen, dass das Verbindungsrohr als separates Bauteil innerhalb der Rippe verläuft, aber andererseits kann die Rippe selbst auch das Verbindungsohr oder zumindest einen Teil des Verbindungsrohrs bilden.

In einer weiteren Ausführung kann in jeder Rippe ein Wassertank der ersten und der zweiten Gruppe angeordnet sein. Dabei erstreckt sich das Verbindungsrohr des Wassertanks der ersten Gruppe durch die Rippe hindurch. Weiter sind die Wassertanks jeder Rippe in Umfangrichtung der Trommel gegeneinander versetzt, d.h. sie befinden sich an unterschiedlichen Winkelpositionen auf dem Trommelmantel.

In einer weiteren Ausführung kann jeder Wassertank zwischen zwei benachbarten Rippen angeordnet werden, was eine raumsparende Anordnung erlaubt. Insbesondere kann sich hierbei jeder Wassertank zwischen den beiden benachbarten Rippen erstrecken, d.h. seine Länge entlang dem Trommelumfang entspricht mindestens dem Rippenabstand.

In diesem Falle können sich von jedem Wassertank der ersten Gruppe zwei Verbindungsrohre zum zweiten Ende der Trommel erstrecken. Vorteilhaft erstreckt sich dabei das eine dieser Verbindungsrohre durch die eine zum Wassertank benachbarte Rippe und das andere dieser Verbindungsrohre erstreckt sich durch die andere zum Wassertank benachbarte Rippe. Wiederum ergibt sich damit ein Aufbau hoher Symmetrie.

In einer weiteren vorteilhaften Ausführung kann im Innenraum jedes Wassertanks mindestens eine Prallplatte angeordnet sein, welche senkrecht zur Drehachse steht. Diese erlaubt es, den Fluss des Wassers in Achsrichtung zu dämpfen.

Das Gerät kann weiter in an sich bekannter Weise mit einem ruhenden Gehäuse und einem auslenkbar zum Gehäuse gelagerten Bottich ausgestattet sein. Die Trommel ist drehbar im Bottich angeordnet. Weiter ist eine Messanordnung vorgesehen, um Auslenkungen und Schwenkbewegungen des Bottichs gegenüber dem Gehäuse in sechs Freiheitsgraden zu messen.

In diesem Falle kann die Messanordnung vorteilhaft mehrere, insbesondere mindestens zwei, insbesondere mindestens sechs, optische Sensoren aufweisen.

Beispielsweise kann jeder optische Sensor eine Abbildungsoptik aufweisen. Mit dieser Abbildungsoptik wird ein Referenzpunkt auf einen ortssensitiven Detektor abgebildet. Dabei sind entweder der Referenzpunkt am Bottich und der Sensor am Gehäuse angeordnet, oder der Sensor ist am Bottich und der Referenzpunkt am Gehäuse angeordnet. So kann eine Auslenkung des Bottichs gegenüber dem Gehäuse mit dem Sensor gemessen werden.

Insbesondere kann dabei am Referenzpunkt eine Lichtquelle angeordnet sein, oder eine von einer Lichtquelle angestrahlte, reflektierende Struktur.

In einer anderen Ausführung kann die Messanordnung mehrere, insbesondere mindestens sechs, magnetische Sensoren aufweisen.

In diesem Falle kann jeder magnetische Sensor mindestens einen Hallsensor und einen Magneten aufweisen. Dabei können entweder der Hallsensor am Bottich und der Magnet am Gehäuse oder der Magnet am Bottich und der Hallsensor am Gehäuse angeordnet sein.

Die vorliegende Erfindung eignet sich insbesondere für Geräte, bei denen die Drehachse der Trommel horizontal oder unter einem geringen Winkel (z.B. kleiner 10°) zur Horizontalen angeordnet ist. Denkbar ist jedoch auch ein Einsatz in Geräten mit vertikaler oder schräger Drehachse.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Vorderansicht (ohne Türe) einer ersten Ausführung einer Waschmaschine,
Fig. 2 einen Schnitt entlang der Drehachse durch die Waschmaschine nach Fig. 1,
Fig. 3 eine schematische Ansicht der Trommel und der Wassertanks der Waschmaschine,
Fig. 4 eine konkrete Ausführung einer Rippe mit Wassertank in Explosionsdarstellung,
Fig. 5 eine Rippe mit Wassertanks gemäss einer zweiten Ausführung der Waschmaschine,
Fig. 6 einen Schnitt senkrecht zur Drehachse einer weiteren Ausführung der Waschmaschine,
Fig. 7 einen Schnitt entlang der Drehachse durch die Waschmaschine nach Fig. 6 und
Fig. 8 eine schematische Darstellung eines Sensors.

### Wege zur Ausführung der Erfindung

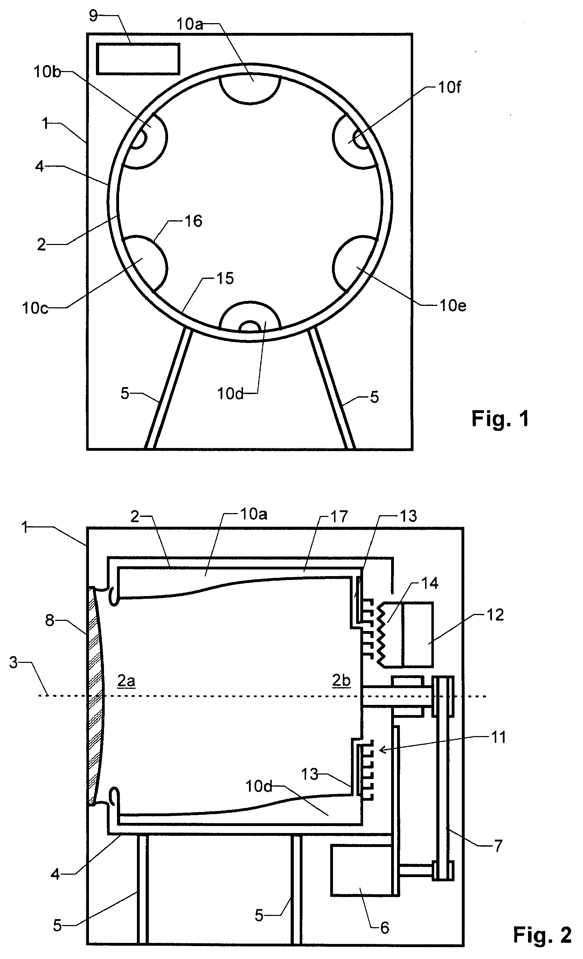

Die Waschmaschine gemäss Fig. 1 bis 3 besitzt ein ruhendes Gehäuse 1, in welchem eine Trommel 2 zur Aufnahme von Wäsche angeordnet ist. In der dargestellten Ausführung ist die Trommel 2 um eine im Wesentlichen horizontale Drehachse 3 drehbar in einem Bottich 4 montiert. Der Bottich 4 ist über Stützen und/oder Aufhängungen 5 auslenkbar im Gehäuse 1 gelagert. Die Stützen oder Aufhängungen 5 sind elastisch und weisen Mittel zum Dämpfen der Auslenkungen des Bottichs 4 auf.

Am Bottich 4 ist weiter ein Motor 6 montiert, welcher die Trommel 2 über einen Antriebsriemen 7 zur Drehung antreibt.

Nach vorne, d.h. zur Benutzerseite hin, sind die Trommel 2 und der Bottich 4 von einer Türe 8 abschliessbar.

Das Gerät ist mit einer Steuerung 9 ausgestattet, welche die verschiedenen Komponenten steuert.

Das Gerät ist dazu ausgestaltet, Wäsche in an sich bekannter Weise zu waschen. Hierzu sind in der Steuerung 9 verschiedene Waschprogramme abgelegt. In mindestens einem Teil dieser Waschprogramme ist eine Zentrifugierphase vorgesehen, bei welcher die Trommel 2 mit hoher Drehzahl gedreht wird. Diese Drehzahl liegt bei mindestens rund 600 Umdrehungen pro Minute, typisch bei rund 1000 oder mehr Umdrehungen pro Minute.

Beim Zentrifugieren, sowie auch beim Hochfahren der Trommeldrehung zum Zentrifugieren, ist es wichtig, dass die Trommel 2 gut ausgewuchtet ist. Insbesondere wenn die Wäsche ungleichmässig in der Trommel verteilt ist, kann es ohne zusätzliche Massnahmen zu starken Vibrationen kommen, welche von den Stützen und/oder Aufhängungen aufgefangen werden müssen.

Deshalb wird im Betrieb die Unwucht der Trommel gemessen (geeignete Messmittel hierzu werden weiter unten beschrieben), und es sind Wassertanks 10 an der Trommel vorgesehen, welchen abhängig von der Unwucht individuell Wasser zugeführt wird, um so einen gleichmässigeren Trommellauf zu erzielen.

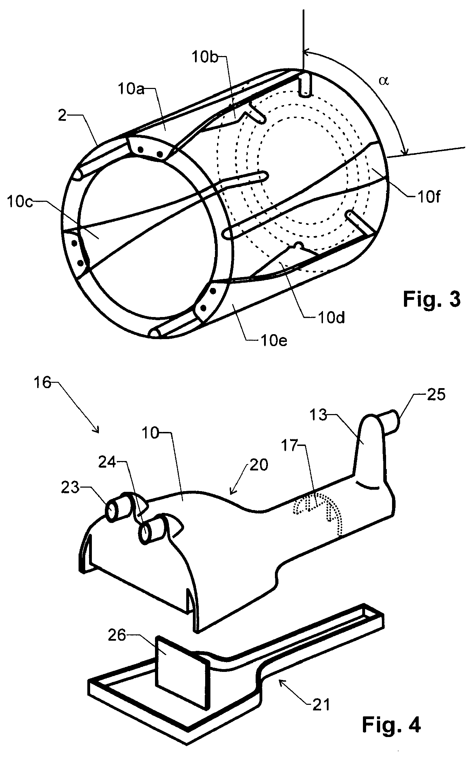

In der Ausführung nach Fig. 1 - 3 sind insgesamt sechs Wassertanks 10a - 10f vorgesehen, die über den Umfang der Trommel äquidistant, d.h. gleichmässig verteilt sind, so dass bei sechs Wassertanks der Winkelabstand α zwischen benachbarten Wassertanks 60° beträgt (vgl. Fig. 3).

Da mit den Wassertanks 10 nicht nur Auslenkungen, sondern auch Taumelbewegungen der Trommel 2 kompensiert werden sollen, muss ein Teil der Wassertanks am vorderen, ersten Ende 2a der Trommel 2 und ein anderer Teil der Wassertanks am hinteren, zweiten Ende 2b angeordnet werden. Deshalb sind die Wassertanks, wie bereits eingangs erwähnt, in mindestens zwei Gruppen unterteilt. Die Wassertanks der ersten Gruppe, welche im vorliegenden Beispiel die Wassertanks 10a, 10c und 10e umfasst, sind so angeordnet, dass sich der Schwerpunkt jedes dieser Wassertanks (in gefülltem Zustand) näher am ersten Ende 2a als am zweiten Ende 2b der Trommel 2 befindet. Demgegenüber sind die Wassertanks der zweiten Gruppe, im vorliegenden Beispiel die Wassertanks 10b, 10d und 10f, so angeordnet, dass sich der Schwerpunkt jedes Wassertanks (in gefülltem Zustand) näher am zweiten Ende 2b als am ersten Ende 2a der Trommel 2 befindet.

Die Wassertanks 10 der ersten und zweiten Gruppe sind alternierend über den Umfang der Trommel 2 verteilt, d.h. benachbart zu jedem Wassertank der ersten Gruppe sind zwei Wassertanks der zweiten Gruppe angeordnet, und umgekehrt.

Zum Zuführen von Wasser zu den Wassertanks 10a - 10f ist am hinteren, zweiten Ende 2b der Trommel in an sich bekannter Weise eine Einfüllvorrichtung vorgesehen, welche eine Anordnung von Füllringen 11 an der Trommelrückseite sowie eine Einspritzanordnung 12 umfasst. Über die Einspritzanordnung 12 kann bei drehender Trommel 2 Wasser in die Füllringe 11 eingespritzt werden. In der vorliegenden Ausführung sind sechs Füllringe 11 vorgesehen, von denen jeder einem der Wassertanks 10 zugeordnet ist. Die Einspritzanordnung 12 besitzt entsprechend sechs Düsen 14, welche die Füllringe 11 gezielt mit Wasser beschicken können.

Auf der Innenseite des Mantels 15 der Trommel sind in der vorliegenden Ausführung insgesamt sechs Rippen 16 angeordnet, die als Mitnehmer für die Wäsche dienen. In jeder dieser Rippen 16 ist im Beispiel gemäss Fig. 1 - 3 jeweils genau einer der Tanks 10 untergebracht.

Jede Rippe 16 erstreckt sich zwischen dem ersten Ende 2a und dem zweiten Ende 2b der Trommel 2. Diejenigen Rippen 16, die einen Wassertank 10a, 10c, 10e der ersten Gruppe aufnehmen, verjüngen sich zum zweiten Ende 2b hin, während sich die anderen Rippen, die einen Wassertank 10b, 10d, 10f der zweiten Gruppe aufnehmen, zum ersten Ende 2a hin verjüngen.

Für diejenigen Rippen 16, welchen einen Wassertank 10a, 10c, 10e der ersten Gruppe aufnehmen, bildet der dem zweiten Ende 2b der Trommel 2 zugewandte, verjüngte Abschnitt jeweils ein Verbindungsrohr 17 (vgl. Fig. 2), um den Wassertank mit der Einfüllvorrichtung 11, 12 zu verbinden.

Wie aus Fig. 1 - 3 ersichtlich, sind alle Rippen 16 sowie die Wassertanks 10a - 10f zueinander baugleich, aber alternierend nach vorne und hinten ausgerichtet.

In Fig. 4 ist eine etwas abgewandelte, aber im Wesentlichen funktionsgleiche Ausführung einer Rippe 16 dargestellt. Auch sie ist im Wesentlichen keulenförmig ausgeführt und verjüngt sich gegen ein Ende hin.

Die dargestellte Ausführung ist zweiteilig ausgestaltet, mit einem Deckelteil 20 und einem Bodenteil 21. Dabei ist der Bodenteil 21 am Mantel der Trommel 2 angeordnet oder wird von diesem gebildet, während der Deckelteil 20 fix auf dem Bodenteil 21 montiert wird.

Der dickere Endabschnitt der Rippe 16 bildet den Wassertank 10, während der dünnere Endabschnitt das Verbindungsrohr 17 bildet.

Wie ersichtlich, sind am Wassertank 10 insgesamt mindestens drei Öffnungen 23, 24, 2254 angeordnet.

Zwei dieser Öffnungen 23, 24 befinden sich am dickeren Ende der Rippe 16, direkt am Wassertank 10. Die dritte Öffnung 25 ist mit dem Wassertank über das Verbindungsrohr 17 und die Zufuhrleitung 13 verbunden.

Die Funktion der drei Öffnungen 23, 24, 25 hängt davon ab, wie die Rippe 16 in der Trommel 2 eingebaut ist, d.h. ob die Rippe 16 einen Wassertank 10 der ersten oder der zweiten Gruppe aufnimmt.

Ist der dickere Endabschnitt der Rippe 16 zum ersten Ende 2a der Trommel hin orientiert, bildet die Rippe 16 einen Wassertank der ersten Gruppe. In diesem Falle bildet die Öffnung 25, mit welcher der Wassertank 10 über das Verbindungsrohr 17 und die Zufuhrleitung 13 verbunden ist, die Einfüllöffnung des Wassertanks 10. Die beiden Öffnungen 23, 24, die direkt am Wassertank 10 angeordnet sind, bilden Entlüftungsöffnungen, welche einerseits beim Einfüllen von Wasser über die Einfüllöffnung Luft aus dem Wassertank 10 ableiten, und andererseits nach dem Zentrifugieren als zusätzlicher Wasserablauf dienen. Optional kann auch eine der Entlüftungsöffnungen bei Bedarf verschlossen sein.

Ist der dickere Endabschnitt der Rippe 16 zum zweiten Ende 2b der Trommel hin orientiert, bildet die Rippe 16 einen Wassertank der zweiten Gruppe. In diesem Falle werden weder die Zufuhrleitung 13 noch die zugehörige Öffnung 25 benötigt. Die Zufuhrleitung 13 kann abmontiert werden, und die Rippe kann an ihrem dünnen Ende verschlossen werden. Andererseits wird eine der direkt am Tank angeordneten Öffnungen 23, 24 als Einfüllöffnung verwendet und mit einem der Füllringe 11 verbunden, während die andere dieser zwei Öffnungen 23, 24 als Entlüftungsöffnung dient.

Weiter ist aus Fig. 4 ersichtlich, dass im Wassertank 10 eine Prallplatte 26 angeordnet sein kann. Diese steht senkrecht zur Drehachse 3 der Trommel 2 und dient dazu, die Wasserströmung in axialer Richtung abzubremsen und so das ganze System besser zu dämpfen.

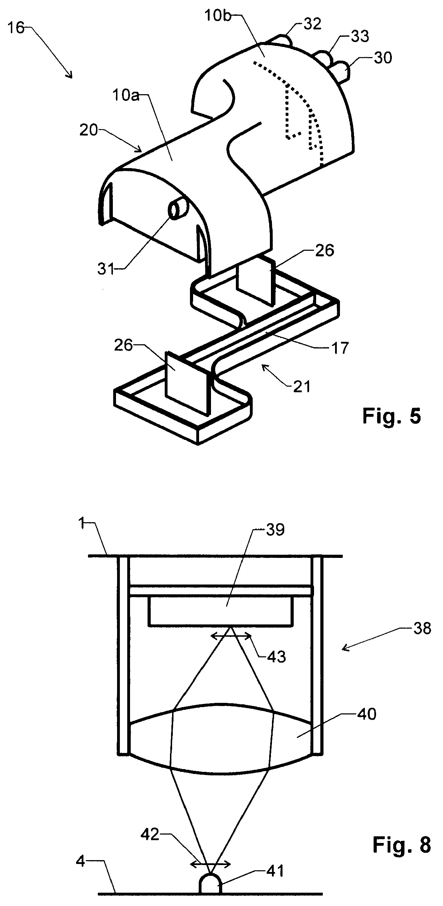

In Fig. 5 ist eine Ausführung dargestellt, bei welcher eine Rippe 16 einen Wassertank 10a der ersten Gruppe sowie einen Wassertank 10b der zweiten Gruppe aufnimmt.

Auch diese Ausführung ist zweiteilig ausgestaltet, mit einem Deckelteil 20 und einem Bodenteil 21. Dabei ist der Bodenteil 21 am Mantel der Trommel 2 angeordnet oder wird von diesem gebildet, während der Deckelteil 20 fix auf dem Bodenteil 21 montiert wird.

Der Wassertank 10a der ersten Gruppe ist in einem ersten Endabschnitt der Rippe 16 angeordnet, während der Wassertank 10b der zweiten Gruppe in einem zweiten Endabschnitt angeordnet ist. Die Rippe 16 wird so in der Trommel 2 montiert, dass der Wassertank 10a der ersten Gruppe zum ersten Ende 2a der Trommel 2 hin orientiert ist.

Insgesamt werden von diesem Rippentyp nur drei Rippen in der Trommel 2 benötigt, dies im Gegensatz zu den sechs Rippen der in Fig. 1 3 gezeigten Ausführung.

Das Verbindungsrohr 17 für den Wassertank 10a der ersten Gruppe erstreckt sich in den zweiten Endabschnitt der Rippe 16 und ist dort mit einer Einfüllöffnung 30 verbunden. Zur Entlüftung ist direkt am Wassertank 10a eine Entlüftungsöffnung 31 vorgesehen, welche beim ersten Ende 2a der Trommel zu liegen kommt.

Die Einfüllöffnung 32 sowie die Entlüftungsöffnung 33 des Wassertanks 10b der zweiten Gruppe sind beide im zweiten Endabschnitt der Rippe 16 angeordnet.

Wie bei der Ausführung in Fig. 4 sind auch bei jener in Fig. 5 Prallplatten 26 in den Wassertanks 10, 10b vorgesehen.

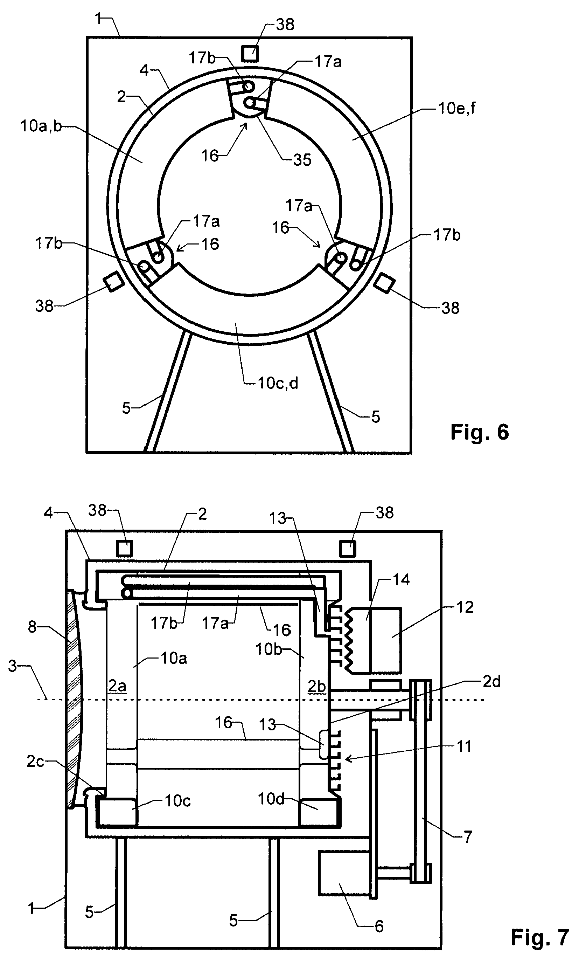

Eine weitere Ausführung der Waschmaschine ist in Fig. 6 und 7 dargestellt.

Im Gegensatz zu den bisher beschriebenen Ausführungen, bei denen die Wassertanks 10 der ersten und zweiten Gruppe zueinander, in Umfangrichtung gesehen, versetzt sind, sind bei dieser Ausführung die Wassertanks 10 der ersten und der zweiten Gruppe vorzugsweise jeweils unter identischen Winkelpositionen angeordnet. Unter "Winkelposition" ist dabei die Position entlang der Umfangrichtung der Trommel 2 zu verstehen.

Jeder Wassertank 10 dieser Ausführung ist jeweils zwischen zwei Rippen 16 angeordnet. Die Zahl der Rippen 16 entspricht der Hälfte der Zahl der Wassertanks 10, d.h. für sechs Wassertanks 10 sind drei Rippen 16 vorgesehen. Weiter besitzt jeder Wassertank 10 eine längliche, gebogene Form, wobei sich die Längsachse des Wassertanks 10 dem Umfang der Trommel 2 entlang erstreckt.

Die Wassertanks 10a, 10c, 10e der ersten Gruppe sind am ersten Ende 2a der Trommel 2 angeordnet, die Wassertanks 10b, 10d, 10f der zweiten Gruppe am zweiten Ende 2b.

Jeder Wassertank 10a, 10c, 10e der ersten Gruppe ist jeweils über zwei Verbindungsrohre 17a, 17b mit dem zweiten Ende 2b der Trommel 2 und dort mit den Füllringen 11 verbunden. Jede Rippe 16 nimmt jeweils zwei Verbindungsrohre 17a, 17b zweier benachbarter Wassertanks der ersten Gruppe auf. Mit anderen Worten erstreckt sich jeweils das eine der Verbindungsrohre 17a, 17b eines Wassertanks 10 durch die eine zum Wassertank 10 benachbarte Rippe 16 und das andere der Verbindungsrohre 17a, 17b desselben Wassertanks 10 durch die andere zum Wassertank 10 benachbarte Rippe 16.

Das eine Verbindungsrohr 17a jedes Wassertanks 10 der ersten Gruppe ist, gegebenenfalls über eine Zufuhrleitung 13, mit der Einfüllöffnung des Wassertanks 10 verbunden, während das andere Verbindungsrohr 17b mit der Entlüftungsöffnung des Wassertanks 10 verbunden ist.

Alternativ können die Wassertanks 10 der ersten Gruppe auch nach vorne entlüftet sein. In diesem Fall ist pro Wassertank der ersten Gruppe nur ein Verbindungsrohr 17 zum zweiten Ende 2b der Trommel erforderlich.

Die Einfüll- und Entlüftungsöffnungen der Wassertanks 10b, 10d, 10f der zweiten Gruppe können direkt am zweiten Ende der Trommel 2 angeordnet sein.

Die Verbindungsleitungen 17a, 17b sind in der dargestellten Ausführung von einem Blech 35 abgedeckt, das die eigentliche Rippe 16 bildet. Alternativ können die Verbindungsleitungen 17a, 17b mindestens teilweise auch direkt von der Wand der Rippe 16 gebildet werden.

Wie aus Fig. 7 ersichtlich, weist die Trommel 2 in ihrem Mündungsbereich (d.h. dem der Türe 8 zugewandten Bereich) einen nach innen verlaufenden Wandabschnitt 2c radial innerhalb der Wassertanks 10 auf und umfasst so die Wassertanks 10a, 10c und 10e der ersten Gruppe mindestens teilweise von drei Seiten. Weiter besitzt die Trommel 2 am zweiten Ende 2b einen nach innen versetzten Wandbereich 2d (d.h. einen Wandbereich, der relativ zu der ihm umgebenden Trommelwand gegen das Innere der Trommel 2 hin versetzt ist), so dass auch dort die Wassertanks 10b, 10d und 10f der zweiten Gruppe von drei Seiten mindestens teilweise von der Trommel 2 umfasst sind. Auf der Aussenseite des nach innen versetzten Wandbereichs 2d entsteht so eine Vertiefung, in welcher die Füllrinnen 11 angeordnet werden können. Dies erlaubt eine gute Nutzung des zur Verfügung stehenden Raums.

Wie erwähnt, muss die Waschmaschine eine Messanordnung aufweisen, mit welcher die Unwucht der Trommel 2 gemessen werden kann. Grundsätzlich bekannt sind zu diesem Zweck Messanordnungen, welche auf Beschleunigungssensoren basieren, die am Bottich 4 befestigt sind. Derartige Messanordnungen sind jedoch insbesondere bei geringen Trommeldrehzahlen, z.B. wie sie z.B. zu Beginn der Zentrifugierphase beim Anfahren verwendet werden, wenig genau.

In der Ausführung nach Fig. 6 und 7 ist schematisch eine Messanordnung mit insgesamt mindestens sechs Sensoren 38 dargestellt, mit denen sich Auslenkungen und Schwenkbewegungen des Bottichs 4 gegenüber dem Gehäuse 1 in sechs Freiheitsgraden messen lassen, d.h. es können sowohl die Position wie auch die Winkelstellung des Bottichs 4 gegenüber dem Gehäuse 1 bestimmt werden.

Auch wenn diese Messanordnung nur in Fig. 6 und 7 eingezeichnet ist, kann sie ebenso in einer der übrigen hier dargestellten Ausführungen der Waschmaschine eingesetzt werden.

Vorteilhaft sind jeweils drei der Sensoren 38 am vorderen Ende des Bottichs gleichmässig um dessen Umfang verteilt angeordnet, während die drei anderen Sensoren 38 am hinteren Ende des Bottichs ebenfalls gleichmässig um dessen Umfang verteilt angeordnet sind.

In einer ersten Ausführung ist jeder der Sensoren 38 ein optischer Sensor. Fig. 8 zeigt eine mögliche Ausgestaltung eines solchen Sensors.

Der optische Sensor 38 besitzt einen ortssensitiven Detektor 39. Hierbei kann es sich zum Beispiel um einen Detektor handeln, welcher eine in mindestens drei, vorzugsweise mindestens vier, Bereiche aufgeteilte Messfläche besitzt und der feststellen kann, welche Anteile eines Lichtpunks, der auf die Messfläche fällt, in die jeweiligen Bereiche fallen.

In der dargestellten Ausführung ist der ortssensitive Detektor 39 fest relativ zum Gehäuse 1 angeordnet.

Dem ortssensitiven Detektor 39 ist eine Abbildungsoptik 40 zugeordnet, welche im vorliegenden Beispiel als einfache Linse dargestellt ist, die aber auch komplexer aufgebaut sein kann. Die Abbildungsoptik bildet einen Referenzpunkt 41 am Bottich 4 (d.h. einen Referenzpunkt 41, der relativ zum Bottich 4 ortsfest ist) auf den ortssensitiven Detektor 39 ab.

In der vorliegenden Ausführung wird der Referenzpunkt 41 von einer Lichtquelle gebildet, es kann sich jedoch z.B. auch um eine reflektierende, von einer separaten Lichtquelle angestrahlte Struktur handeln.

Bewegt sich der Referenzpunkt 41 senkrecht zur Abbildungsachse der Abbildungsoptik 40, wie durch einen Pfeil 42 in Fig. 8 dargestellt, so bewegt sich auch der entsprechende Lichtfleck auf dem ortssensitiven Detektor 39, wie durch einen Pfeil 43 dargestellt. Auf diese Weise können die Bewegungen des Bottichs 4 gemessen werden.

In der Ausführung nach Fig. 8 ist der ortssensitive Detektor 39 fest angeordnet, während der Referenzpunkt 41 an der Trommel 4 angeordnet ist. Denkbar ist auch eine Ausgestaltung, bei welcher der ortssensitive Detektor 41 an der Trommel 4 und der Referenzpunkt 41 fest angeordnet sind.

In einer alternativen Ausführung kann die Messanordnung mehrere, insbesondere mindestens sechs magnetische Sensoren aufweisen. In diesem Fall umfasst jeder magnetische Sensor mindestens einen Hallsensor und einen Magneten. Dabei können der Hallsensor am Bottich und der Magnet am Gehäuse oder der Magnet am Bottich und der Hallsensor am Gehäuse angeordnet sein.

Um mit jedem magnetischen Sensor die Richtungen der Bewegung des Bottichs in zwei Dimensionen zu erkennen, sind vorzugsweise pro magnetischem Sensor mindestens zwei Hallsensoren vorgesehen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Waschmaschine zum Waschen von Wäsche mit
einer um eine Drehachse (3) drehbaren Trommel (2), wobei die Trommel (2) sich entlang der Drehachse (3) zwischen einem ersten und einem zweiten Ende (2a, 2b) erstreckt, und
an der Trommel (2) angeordneten Wassertanks (10) zum Ausgleichen einer Unwucht der Trommel (2), wobei jeder Wassertank (10) in einem gefüllten Zustand einen Schwerpunkt besitzt,
**dadurch gekennzeichnet, dass** die Waschmaschine insgesamt mindestens sechs Wassertanks (10) aufweist, welche in mindestens zwei Gruppen unterteilt sind, wobei die Schwerpunkte der Wassertanks (10) der ersten Gruppe sich näher am ersten Ende (2a) als am zweiten Ende (2b) der Trommel (2) befinden und die Schwerpunkte der Wassertanks (10) der zweiten Gruppe sich näher am zweiten Ende (2b) als am ersten Ende (2a) der Trommel (2) befinden.

2. Waschmaschine nach Anspruch 1, wobei am zweiten Ende (2b) der Trommel (2) eine Einfüllvorrichtung (11, 12) angeordnet ist, über welche Wasser in die Wassertanks (10) einbringbar ist.

3. Waschmaschine nach Anspruch 2, wobei sich von jedem Wassertank (10) der ersten Gruppe ein Verbindungsrohr (17), insbesondere parallel zur Drehachse (3), zum zweiten Ende (2b) der Trommel (2) erstreckt, und insbesondere wobei der jeweilige Wassertank (10) über das Verbindungsrohr (17) mit der Einfüllvorrichtung (11, 12) verbunden ist,
und insbesondere wobei ein Volumen des Verbindungsrohrs (17) kleiner ist als ein Volumen des mit dem Verbindungsrohr (17) verbundenen Wassertanks (10).

4. Waschmaschine nach Anspruch 3, wobei sich von jedem Wassertank (10) der zweiten Gruppe ein Verbindungsrohr (17), insbesondere parallel zur Drehachse (3), zum ersten Ende (2a) der Trommel (2) erstreckt, und insbesondere wobei die den ersten Wassertanks (10) zugeordneten Verbindungsrohre (17) baugleich zu den den zweiten Wassertanks (10) zugeordneten Verbindungsrohren (17) sind.

5. Waschmaschine nach einem der vorangehenden Ansprüche, wobei jeder Wassertank (10) mindestens eine Einfüllöffnung und mindestens eine Entlüftungsöffnung aufweist, und insbesondere wobei sich die Entlüftungsöffnungen der Wassertanks (10) der ersten Gruppe am ersten Ende (2a) der Trommel (2) und die Entlüftungsöffnungen der Wassertanks (10) der zweiten Gruppe am zweiten Ende (2b) der Trommel (2) angeordnet sind.

6. Waschmaschine nach den Ansprüchen 3 und 5, wobei an jedem Wassertank (10) nebst einer Öffnung zum Verbindungsrohr (17) mindestens zwei weitere Öffnungen (23, 24) vorgesehen sind, wobei für die ersten Wassertanks (10) die Öffnung zum Verbindungsrohr (17) die Einfüllöffnung und mindestens eine der zwei weiteren Öffnungen (23, 24) die Entlüftungsöffnung bildet, und wobei für die zweiten Wassertanks (10) die mindestens zwei weiteren Öffnungen (23, 24) die Einfüll- und die Entlüftungsöffnungen bilden.

7. Waschmaschine nach einem der vorangehenden Ansprüche, wobei die Wassertanks (10) äquidistant über den Umfang der Trommel (2) verteilt sind.

8. Waschmaschine nach einem der vorangehenden Ansprüche, wobei die Wassertanks (10) der ersten und der zweiten Gruppe abwechslungsweise über den Umfang der Trommel (2) angeordnet sind.

9. Waschmaschine nach einem der vorangehenden Ansprüche, wobei an einer Mantelfläche der Trommel (2) nach innen ragende Rippen (16) als Mitnehmer für die Wäsche angeordnet sind.

10. Waschmaschine nach Anspruch 9, wobei zumindest in einem Teil der Rippen (16), vorzugsweise in allen Rippen (16), je ein Wassertank (10) angeordnet ist.

11. Waschmaschine nach einem der Ansprüche 9 oder 10, wobei die Rippen (16) sich jeweils zwischen dem ersten und dem zweiten Ende (2b) der Trommel (2) erstrecken, wobei die Rippen (16), welche einen Wassertank (10) der ersten Gruppe aufnehmen, sich zum zweiten Ende (2b) hin verjüngen, und wobei die Rippen (16), welche einen Wassertank (10) der zweiten Gruppe aufnehmen, sich zum ersten Ende (2a) hin verjüngen.

12. Waschmaschine nach einem der Ansprüche 9 bis 11 und nach einem der Ansprüche 3 oder 4, wobei mindestens ein Teil der Rippen (16) mindestens eines der Verbindungsrohre (17) aufnimmt.

13. Waschmaschine nach Anspruch 12, wobei in jeder Rippe (16) ein Wassertank (10) der ersten und ein Wassertank (10) der zweiten Gruppe angeordnet sind, wobei das Verbindungsrohr (17) des Wassertanks (10) der ersten Gruppe sich durch die Rippe (16) erstreckt, und wobei die Wassertanks (10) jeder Rippe (16) in Umfangrichtung der Trommel (2) gegeneinander versetzt sind.

14. Waschmaschine nach einem der Ansprüche 9 bis 12, wobei jeder Wassertank (10) zwischen zwei benachbarten Rippen (16) angeordnet ist, und insbesondere wobei sich jeder Wassertank (10) zwischen zwei benachbarten Rippen (16) erstreckt.

15. Waschmaschine nach den Ansprüchen 12 und 14, wobei sich von jedem Wassertank (10) der ersten Gruppe zwei Verbindungsrohre (17) zum zweiten Ende (2b) der Trommel (2) erstrecken, und insbesondere wobei sich jeweils das eine dieser Verbindungsrohre (17) durch die eine zum Wassertank (10) benachbarte Rippe (16) und das andere dieser Verbindungsrohre (17) durch die andere zum Wassertank (10) benachbarte Rippe (16) erstrecken.

16. Waschmaschine nach einem der vorangehenden Ansprüche, wobei die Trommel (2) in einem Mündungsbereich einen nach innen verlaufenden Wandabschnitt (2c) radial innerhalb der Wassertanks (10) aufweist und die Wassertanks (10a, 10c und 10e) der ersten Gruppe mindestens teilweise von drei Seiten umfasst.

17. Waschmaschine nach einem der vorangehenden Ansprüche, wobei die Trommel (2) am zweiten Ende (2b) einen nach innen versetzten Wandbereich (2d) aufweist, so dass die Wassertanks (10b, 10d und 10f) der zweiten Gruppe von drei Seiten mindestens teilweise von der Trommel (2) umfasst sind, und insbesondere derart, dass auf einer Aussenseite des nach innen versetzten Wandbereichs (2d) eine Vertiefung entsteht, in welcher Füllrinnen (11) der Einfüllvorrichtung (11, 12) angeordnet sind.

18. Waschmaschine nach einem der vorangehenden Ansprüche, wobei in einem Innenraum jedes Wassertanks (10) mindestens eine Prallplatte (26) angeordnet ist, welche senkrecht zur Drehachse (3) steht.

19. Waschmaschine nach einem der vorangehenden Ansprüche mit
einem Gehäuse (1),
einem gegenüber dem Gehäuse auslenkbar gelagerten Bottich (4), in welchem die Trommel (2) drehbar angeordnet ist und
einer Messanordnung (38), um Auslenkungen und Schwenkbewegungen des Bottichs (4) gegenüber dem Gehäuse (1) in sechs Freiheitsgraden zu messen.

20. Waschmaschine nach Anspruch 19, wobei die Messanordnung (38) mehrere, insbesondere mindestens zwei, insbesondere mindestens sechs, optische Sensoren (39 - 41) aufweist.

21. Waschmaschine nach Anspruch 20, wobei jeder optische Sensor (39 - 41) eine Abbildungsoptik (40) aufweist, mittels welcher ein Referenzpunkt (41) auf einen ortssensitiven Detektor (39) abbildbar ist, wobei der Referenzpunkt (41) am Bottich (4) und der ortssensitive Detektor (39) am Gehäuse (1) oder der ortssensitive Detektor (39) am Bottich (4) und der Referenzpunkt (41) am Gehäuse (1) angeordnet sind.

22. Waschmaschine nach Anspruch 21, wobei am Referenzpunkt (41) eine Lichtquelle angeordnet ist, oder eine von einer Lichtquelle angestrahlte, reflektierende Struktur.

23. Waschmaschine nach Anspruch 19, wobei die Messanordnung (38) mehrere, insbesondere mindestens sechs, magnetische Sensoren aufweist.

24. Waschmaschine nach Anspruch 23, wobei jeder magnetische Sensor mindestens einen Hallsensor und einen Magneten aufweist, wobei der Hallsensor am Bottich und der Magnet am Gehäuse oder der Magnet am Bottich und der Hallsensor am Gehäuse angeordnet sind.
